(19) **Europäisches Patentamt European Patent Office Office européen des brevets**

(11) **EP 4 407 496 B1**

(12) **EUROPEAN PATENT SPECIFICATION**

(45) Date of publication and mention of the grant of the patent:
**04.03.2026 Bulletin 2026/10**

(51) International Patent Classification (IPC):
**G06F 21/57** *(2013.01)*    **G06F 21/56** *(2013.01)*
**G06N 3/08** *(2023.01)*    **G06N 3/045** *(2023.01)*

(21) Application number: **24151716.8**

(22) Date of filing: **12.01.2024**

(52) Cooperative Patent Classification (CPC):
**G06F 21/563; G06F 21/577; G06N 3/045; G06N 3/08;** G06F 2221/033

(54) **METHODS AND SYSTEMS FOR IDENTIFYING BINARY CODE VULNERABILITY**

VERFAHREN UND SYSTEME ZUR IDENTIFIZIERUNG VON BINÄRCODEVERWUNDBARKEIT

PROCÉDÉS ET SYSTÈMES D'IDENTIFICATION DE VULNÉRABILITÉ DE CODE BINAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.01.2023 US 202363441994 P**

(43) Date of publication of application:
**31.07.2024 Bulletin 2024/31**

(73) Proprietor: **BlackBerry Limited Waterloo, Ontario N2K 0A7 (CA)**

(72) Inventors:
• **LI, Li Tao**
 **Waterloo, N2K 0A7 (CA)**
• **DING, Honghui**
 **Waterloo, N2K 0A7 (CA)**
• **FUNG, Benjamin C.M.**
 **Waterloo, N2K 0A7 (CA)**

(74) Representative: **Murgitroyd & Company**
**165-169 Scotland Street**
**Glasgow G5 8PL (GB)**

(56) References cited:
• **DIWAN ASHITA ET AL: "VDGraph2Vec: Vulnerability Detection in Assembly Code using Message Passing Neural Networks", 2022 21ST IEEE INTERNATIONAL CONFERENCE ON MACHINE LEARNING AND APPLICATIONS (ICMLA), IEEE, 12 December 2022 (2022-12-12), pages 1039 - 1046, XP034315090, DOI: 10.1109/ICMLA55696.2022.00173**
• **TRISTAN BILOT ET AL: "A Survey on Malware Detection with Graph Representation Learning", ARXIV.ORG, CORNELL UNIVERSITY LIBRARY, 201 OLIN LIBRARY CORNELL UNIVERSITY ITHACA, NY 14853, 17 August 2023 (2023-08-17), XP091585951**

Description

## FIELD OF THE DISCLOSURE

The present disclosure relates to the identification of software vulnerabilities, and in particular relates to the identification of vulnerabilities using binary code.

## BACKGROUND

The background description includes information that may be useful in understanding the present inventive subject matter. It is not an admission that any of the information provided herein is prior art or applicant admitted prior art, or relevant to the presently claimed inventive subject matter, or that any publication specifically or implicitly referenced is prior art or applicant admitted prior art.

Software vulnerability is an ongoing challenge in the cybersecurity domain. Such vulnerabilities become more common as software systems grow more complex. Many malicious cyber attacks exploit the vulnerabilities within a system and can cause tremendous economic and security damage. Often security analysts cannot patch the vulnerabilities quickly enough when new vulnerabilities are created. Specifically, statistics on common vulnerabilities and exposures has found that the total number of vulnerabilities in software more than doubled between 2016 to 2017, and has continued to rise throughout recent years.

Many traditional static and dynamic analysis methods are manually expensive and inefficient, which encourages automated and end-to-end approaches, including neural network approaches.

Vulnerabilities can be detected at either the source code level or the binary code level. Source code provides much more meaningful semantics, syntax and structures, which helps both human and machine learning models to track the vulnerabilities. Existing methods of the source code level are accurate and capable of finding complex vulnerabilities.

Conversely, binary code loses information during compilation, and it is therefore much harder to detect vulnerabilities within binary code. Moreover, the absence of the original source code is a practical problem under many circumstances, such as third party or off the shelf programs. Binary code may be analyzed as assembly code, a form of intermediate representation that provides human readable content. Assembly code contains instructions that provides some semantics and structures of the program.

Ashita Diwan et. Al: "VDGraph2Vec: Vulnerability Detection in Assembly Code using Message Passing Neural Networks", 12 Dec 2022, 21st IEEE International Conference on machine Learning and Applications relates to Software vulnerability detection.

## SUMMARY

Accordingly there is provided a method, a device, a computer readable medium, and a computer program as detailed in the claims as followed.

## BRIEF DESCRIPTION OF THE DRAWINGS

The present disclosure will be better understood having regard to the drawings in which:

**Figure 1** is a block diagram showing a model for determining vulnerabilities in binary code in accordance with the embodiment of the present disclosure.

**Figure 2** is a block diagram showing learning epochs in accordance with the embodiments of the present disclosure.

**Figure 3** is a block diagram of a simplified computing device for performing the methods disclosed herein.

## DETAILED DESCRIPTION OF THE DRAWINGS

The present disclosure is directed to binary code vulnerability detection. Such vulnerability detection in binary code is a prevalent challenge in the security domain.

In particular, software vulnerability is an often studied challenge for cybersecurity. Manual security patches are often difficult and slow to be deployed, while new vulnerabilities are created. Binary code vulnerability is less studied and harder to detect than source code vulnerability detection.

Deep learning has become an efficient and powerful tool in the security domain, as it provides end-to-end and accurate prediction of security faults. Modern deep learning approaches learn the program semantics through sequence and graph neural networks using various intermediate representations of programs. Examples of such intermediate representations may include an Abstract Syntax Tree (AST) or a Control Flow Graph (CFG).

Due to the complex nature of program execution, the output of an execution depends on the many program states and the input provided. The intermediate representation, such as a CFG generated from a static analysis, can be an overestimation of the true program flow. Specifically, certain results may be unattainable in the program, and thus branches of the graph that cannot be achieved may still form part of the control flow graph.

Moreover, the size of programs often does not allow a graph neural network with fixed layers to aggregate global information.

Therefore, in accordance with embodiments of the present disclosure, an agent-based implicit neural network that mimics the execution path of a program is provided. Reinforcement learning is used to enhance the branching decisions at every program state transition and create a dynamic environment to learn the dependency between a vulnerability and certain program states.

Further, in accordance with embodiments of the present disclosure a method at a computing device for vulnerability detection in software code may be provided. The method may include creating a node representation of the software code; performing state transition and topology learning on the node representation. The preforming may include: looping through multiple execution states within a training epoch; sampling over the distribution of the multiple execution states and retrieving a maximum value; performing agent re-parameterization; capturing intermediate execution paths; selecting an execution path from the intermediate execution paths and generating a state-dependent adjacency matrix; using the state-dependent adjacency matrix and node representation with an implicit Graph Neural Network to find an equilibrium vector state; and using the equilibrium vector state to perform a prediction task.

Further, in accordance with embodiments of the present disclosure, a computing device configured for vulnerability detection in software code may be provided, the computing device including a processor; and a memory. The computing device may be configured to: create a node representation of the software code; and perform state transition and topology learning on the node representation by causing the computing device to: loop through multiple execution states within a training epoch; sample over the distribution of the multiple execution states and retrieving a maximum value; perform agent re-parameterization; capture intermediate execution paths; select an execution path from the intermediate execution paths and generate a state-dependent adjacency matrix; use the state-dependent adjacency matrix and node representation with an implicit Graph Neural Network to find an equilibrium vector state; and use the equilibrium vector state to perform a prediction task.

Further, in accordance with embodiments of the present disclosure a computer readable medium for storing instruction code may be provided. The instruction code, when executed by a processor of a computing device configured for vulnerability detection in software code, may cause the computing device to: create a node representation of the software code; perform state transition and topology learning on the node representation by causing the computing device to: loop through multiple execution states within a training epoch; sample over the distribution of the multiple execution states and retrieving a maximum value; perform agent re-parameterization; capture intermediate execution paths; select an execution path from the intermediate execution paths and generate a state-dependent adjacency matrix; use the state-dependent adjacency matrix and node representation with an implicit Graph Neural Network to find an equilibrium vector state; and use the equilibrium vector state to perform a prediction task.

Such implicitly defined neural network enables nearly infinite state transitions until convergence, which captures the structural information at a higher level. In practice, the models provided by the present disclosure were utilized with two semi-synthetic and two real world data sets to demonstrate that such system is an accurate and efficient method which outperforms state-of-the-art vulnerability detection methods.

## Deep Learning Methods

Deep learning methods aim to learn the latent representation of a piece of a binary code for classification. Existing techniques for binary code learning can be categorized into two main streams.

A first approach for deep learning focuses on text-based representation learning to extract token semantics. Instructions are broken down and embedded into vectors through some unsupervised learning algorithm. One example system for this is the Word2Vec system described in Tomas Mikolov et al, "Efficient estimation of word representations in vector space", 2013, arXiv preprint arXiv: 1301.3781.

These vectors are then fed into a sequential deep learning model for classification. Examples of this semantic-based approach for detection include Instruction2Vec, described in Lee et al, "Instruction2Vec: Efficient Preprocessor of Assembly Code to Detect Software Weakness with CNN", Applied Sciences 9, 19 (2019), 4086; HAN-BSVD described in Han Yan et al, "HAN-BSVD: a hierarchical attention network for binary software vulnerability detection", Computers & Security 108 (2021), 102286; and BVDetector, described in Junfeng Tian et al., "BVDetector: A program slice-based binary code vulnerability intelligent detection system", Information and Software Technology 123 (2020) 106289.

A second approach involves collecting and aggregating structural information at a higher level. Usually, CFGs are parsed from the assembly code basic block, which create dependencies between different blocks of code. The dependencies are important, since programs are complex and hierarchical, and vulnerabilities are often triggered in specific program states. Using only semantics of instruction tokens is often insufficient. Examples of graph-based methods for binary code structure embedding are for example found in: Gemini, described in Xiaojun Xu et al., "Neural network-based graph embedding for cross-platform binary code similarity detection", Proceedings of the 2017 ACM SIGSAC Conference on Computer and Communications Security, 363-376; Diff, described in Bingchang Liu et al., "αdiff: cross-version binary code similarity detection with dnn", Proceedings of the 33rd ACM/IEEE International Conference on Automated Software Engineering, 667-678; Order, described in Zeping Yu et al., "Order matters: semantic-aware newual networks for binary code similarity detection", Proceedings of the AAAI Conference on Artificial Intelligence, Vol. 34., 1145-1152; InnerEye described at Fei Zuo et al., "Neural machine translation inspired binary code similarity comparison beyond function pairs", arXiv preprint arXiv:1808.04706 (2018); and BinDeep, described at Donghai Tian et al., "BinDeep: A deep learning approach to binary code similarity detection", Expert Systems With Applications 168 (2021), 114348.

However, for both the first approach and second approach described above, there are major drawbacks that can hinder performance or scalability of the model.

Specifically, one disadvantage is the scalability when large programs are present. Semantic-based approaches usually introduce a maximum input length in order to prevent a vanishing gradient, especially for large and deep sequence models.

Structure-based approaches perform Graph Neural Networks (GNN) for aggregating node information. The number of layers dictates the receptive field of the model by performing $k$-hop message passing, thus limiting the amount of global information that can be learned. Both approaches carefully need to manage the memory footprint during training.

A further drawback is the absence of modeling on how programs naturally run. Unlike natural language, programs are executed dynamically. The state of a program can be different, depending on the input and the previous state of the program. By using fixed graph learning techniques, the dynamic nature of the program structure is difficult to capture and may lead to undesired performance.

Specifically, given the assembly code, one has to respectively find a program execution path that can potentially yield the same final program state. In general, a sound and complete static analysis method generates a representation of the code (i.e. CFG) with overestimation. This means paths created in a graph can potentially never execute. Therefore, learning the topological information solely from the default CFG can be inaccurate and can result in a false execution path.

Symbolic execution, for example as described in Baldoni et al, "A survey of symbolic execution techniques", ACM Computing Surveys (CSUR) 51, 3 (2018) 1-39, is one formal method that enables one to compare and verify all the possible paths through equivalence checking. However, it has limited feasibility as it requires storing all the possible program states associated with all the possible execution paths. This will cause a path explosion problem, especially on large functions with loops. Existing works try to address the path-finding problem statically from an incomplete view, focusing on partial or local structures. For example, DeepBinDiff (see Duan et al. 2020. "Deepbindiff: Learning program-wide code representations for binary diffing", Network and Distributed System Security Symposium) and InnerEye (*ibid*) match the CFGs based on semi-exhaustive path comparison, which is not scalable and also misses the iterative graph learning.

Gemini (*supra*), BinGo (see Chandramohan et al.,2016 "BinGo: cross-architecture cross-OS binary search" Proceedings of the 2016 24th ACM SIGSOFT International Symposium on Foundations of Software Engineering) and Tracelet (see Yaniv David et al. 2014 "Tracelet-based code search in executables", Acm Sigplan Notices 49, 6 (2014), 349-360) use partial path matching, which lacks robustness when programs are easily altered through artificial means.

BinaryAI (see Zeping Yu et al., 2020 "Order matters: semantic-aware neural networks for binary code similarity detection", Proceedings of the AAAI Conference on Artificial Intelligence, Vol. 34. 1145-1152) uses graph convolution for message passing. However, this approach does not consider the mutual exclusive dependencies among edges, covering invalid paths.

The message passing mechanism also assumes a static adjacency matrix which lacks high-level guidance from a global state. The current research in this domain lacks a dedicated way to simulate the program state transitions along the guided valid execution path with a focus on a higher order of node neighborhood proximity.

**Vulnerability Detection**

While vulnerability detection can be conducted at either the source code or binary code level, in the present disclosure both are discussed together, since most of the embodiments can be applied to another level with some modifications. Machine learning-based (non-deep learning) methods involve manual extractions of metrics and inputting these metrics as features. This is for example discussed by Aakanshi Gupta et al., 2021 "Extracting rules for vulnerabilities detection with static metrics using machine learning", International Journal of System Assurance Engineering and Management 12, 1 (2021), 65-76, and Kazi Zakia Sultana et al., "Using software metrics for predicting vulnerable classes and methods in Java projects: A machine learning approach", Journal of Software: Evolution and Process 33, 3 (2021), e2303.

The metrics can be multi-level and leverage the complexity characteristics a program possesses, such as the number of nested loops within a function. Manual feature extractions are more expensive and require expert knowledge.

Also, the features need to be constantly updated to accommodate changes in the code base. Text-based deep learning is very popular among source code vulnerability, where different granularity levels can be leveraged in order to obtain text features or embeddings. Li and Zou, et al. group the tokens based on the semantics and syntax into slices or gadgets (see for example Zhen Li, et al., 2021. "Vuldeelocator: a deep learning-based fine-grained vulnerability detector", IEEE Transactions on Dependable and Secure Computing (2021); Zhen Li et al.,2018 "VulDeePecker: A deep learning-based system for vulnerability detection. arXiv preprint arXiv:1801.01681; and Deqing Zou et al., 2019 "mu μ VulDee-Pecker: A Deep Learning-Based System for Multiclass Vulnerability Detection", IEEE Transactions on Dependable and Secure Computing 18, 5 (2019), 2224-2236and feed into a LSTM model.

For binary code, Instruction2Vec (*ibid*) and Bin2img (*ibid*), utilize instruction embedding as a preprocessing step. Similar to Word2Vec, the embedding contains contextual dependency and can be used to detect vulnerabilities at a later stage, which is a one dimensional Convolutional Neural Network (CNN) model.

These models solely focus on the semantics of the tokens, where the structural information is left out. There are several GNN models at the source code that utilize different graphs that can be parsed from source code such as abstract syntax tree, data dependence graph, and control flow graph, described below.

## Graph Neural Networks (GNN) and Implicit Models

In binary code, GNN methods aim at learning the structures by first parsing the assembly code into control flow graphs and performing message passing. There are multiple variants related to graph neural networks.

The pioneer works of graph neural networks are mostly associated with recurrent graph neural networks, where the node representations are aggregated with a fixed set of parameters. Convolutional graph neural networks expand the GNN by using multiple layers with different parameters. This approach addresses the cyclic mutual dependencies architecturally and is more efficient and powerful. However, GNNs struggle to capture long-range dependencies in large graphs due to the finite number of message passing iterations.

One potential solution involves implicit neural networks. The implicit learning paradigm is different from traditional deep learning as it solves the solution for a given equilibrium problem, which is formulated as an "infinite" layer network. Implicit models have previously shown success in domains such as sequence learning (see Shaojie Bai et al., "Deep equilibrium models", Advances in Neural Information Processing Systems i (2019)), physics engine (see Filipe de Avila Belbute-Peres et al., 2018 "End-to-end differentiable physics for learning and control", Advances in neural information processing systems 31 (2018)), and graph neural networks (see Fangda Gu et al., 2020, "Implicit graph neural networks", Advances in Neural Information Processing Systems 33 (2020), 11984-1199520).

## Terminology and Notation

The following notations and terminology are used in the present disclosure.

**Graph Neural Network (GNN)** is a topological learning technique for input data with graph structures. A graph is represented as G = ($V, E$) that contains n := |$V$| nodes and $e$ := |$E$| edges. An edge $E_{i,j}$ := ($V_iV_j$) represents the directed or undirected connection between node ($i, j$). In practice, the edge information is represented in the form of an adjacency matrix $A \in \mathbb{R}^{n \times n}$. Generally, some initial node embedding $U \in \mathbb{R}^{n \times h}$ may be obtained before feeding into the network. The message passing (i.e. node aggregation) is performed at each GNN layer in accordance with Equation 1 below.

$$X^{t+1} = \phi(X^t W^t A^t) \qquad (1)$$

In Equation 1, $W^t \in \mathbb{R}^{h \times h}$ is a trainable parameter at layer $t$. Each message passing step aggregates 1-hop neighbor information into the current node given that an edge exists in $A$. The final node vector $X^T$ then learns the topological information from all T-hop away neighbors. In case of graph classification, a pooling layer, such as add pooling, can be used to obtain the graph embedding G as provided in Equation 2 below.

$$G = \sum_{i}^{n} X_{i,j}^{T}, \forall j = 1, \ldots, h \qquad (2)$$

**CFGs and Basic Blocks:** The input of the model of the present disclosure may be a binary file in the form of assembly code (although source code could be used in some embodiments). The assembly functions and their CFGs may, in some cases, both be obtained from the reverse engineering tool, IDA Pro. Each function is regarded as a graph $\mathcal{G}$ that contains segmented code blocks called basic blocks, which are sequences of instructions without any jump or call to other blocks. As the input to the neural network, a graph $\mathcal{G}$ = (*V, A*) has the blocks $V \in \mathbb{R}^{nXv}$ with *n* nodes and *v* tokens, and the adjacency matrix $A \in \mathbb{R}^{nXn}$. *A* defines all directed edges within the graph and is obtained from extracting call statements between the blocks. Note that *A* has 0 across the diagonal element and is non-symmetrical.

Moreover, a re-normalization trick may be applied to *A* in order to prevent numerical instabilities during deep network training. Such trick may, for example, be found in Thomas N Kipf and Max Welling. 2016, "Semi-supervised classification with graph convolutional networks" arXiv preprint arXiv:1609.02907 (2016).

For file level classification, the function graphs may be merged as a whole based on the function call information. Moreover, additional information such as comments and names may be removed. The basic blocks *V* only contains operations and operands in the instructions in some embodiments.

**REINFORCE Algorithm:** Reinforcement learning is a class of algorithms that specify the actions within an environment that optimizes the reward *r*. In particular, the REINFORCE algorithm, for example as provided in Ronald J Williams, 1992, "Simple statistical gradient-following algorithms for connectionist reinforcement learning" Machine learning 8, 3 (1992), 229-256, is a form of policy gradient algorithm that computes the stochastic gradient with respect to the reward. It involves a state s that can be obtained from a neural network, an agent *a* that specifies the action space $\mathcal{A}$, and a policy $\pi(a|s)$ that takes the action *a* given a state s with probabilities. Usually, the policy is initialized randomly and the algorithm iterates through epochs, where backpropagation is performed at each epoch to update the policy in the context of a neural network setup.

**Agent-Based Implicit Neural Network**

Inspired by symbolic execution for pathfinding, the present disclosure provides a neural-network model, which the Applicant has named DeepEXE. This model mimics a program state-guided execution process over the control flow graph to detect binary code vulnerability at the function or file level. The model of the present disclosure relies on an execution agent that simulates and learns which direction to take, resulting in simulated paths across different epochs.

The combined node embedding represents the program state, and the branching actions guiding the program flow are based on the program state and code semantics of the current node. The present model leverages the implicit neural network paradigm, where only the final program state is stored before backpropagation. This enables a large simulation step over the execution flow. Compared to the existing methods with only local or partial graph information, the present model enables modelling on the highest global level of view over the execution path.

Therefore, according to the embodiments of the present disclosure, the DeepEXE model is a neural program execution model over a control flow graph for binary vulnerability detection. The model simulates a semantic-guided decision process for stepping through a given function's control flow graph.

Further, to simulate the program execution steps over the graph, a learning agent is provided for making branching decisions with an implicit neural network structure for program state transitions. The leaning agent enables modelling program semantics on higher level views over the execution path.

Further, to address the scalability and limited receptive field of a graph neural network, the implicit deep learning paradigm for "infinite" message passing may be used, which significantly enables global information aggregation in the graph and reduces the memory footprint.

As detailed in the disclosure below, experiments of the model of the present disclosure were conducted on two semi-synthetic datasets and two real world vulnerability datasets. A comparison of the model of the present disclosure was made against several state-of-the-art approaches and results of the comparison show that the model of the present disclosure can consistently outperform the baselines.

Specifically, the present systems and methods define several neural network modules within the architecture $F = (F_S, F_I, F_A)$, where $F_S$ is the sequential model for semantics embedding, $F_I$ is the implicit graph neural network model for structure and node embedding, and $F_A$ is the reinforcement learning agent for dynamic pathing optimizer given certain program states. The goal is to predict whether each function contains a vulnerability. Given the input graph $\mathcal{G}$ = (*V, A*), the

model of the present disclosure learns several levels of information and aggregates them together for the final output of the model, which is a binary classification score $F : \mathcal{G} \to \hat{y} \in \mathbb{R}$. Formally, the following network is defined parameterized by $\theta$ according to Equation 3.

$$\hat{y} = \underset{y' \in 0,1}{\mathrm{argmax}}\, F_\theta(y'|\mathcal{G}, \theta)\,; \theta = \underset{\theta}{\mathrm{argmax}}\, F_\theta(y' = y|\mathcal{G}, \theta) \tag{3}$$

## Neural Control Flow Execution

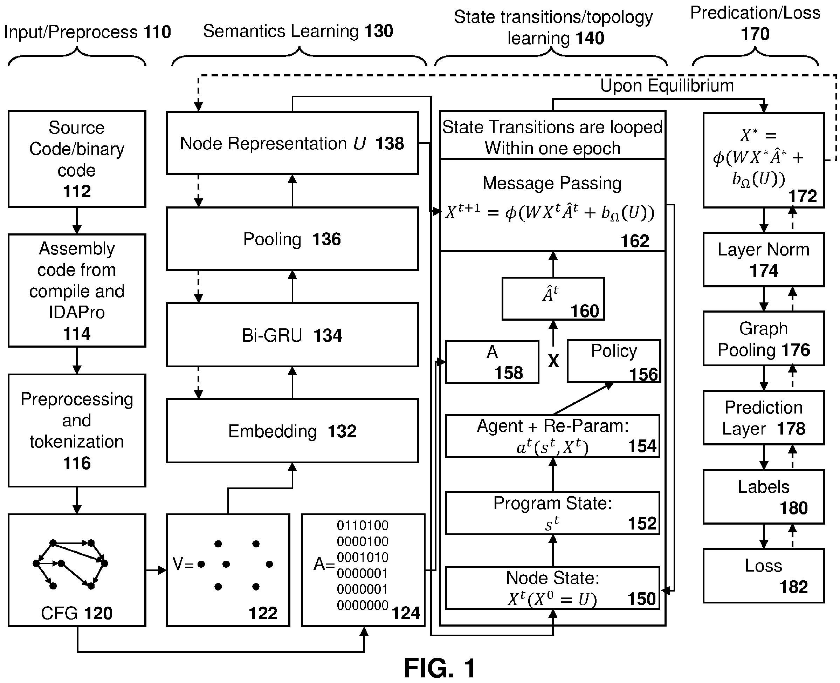

In accordance with one embodiment of the present disclosure, an architecture is provided that is designed with semantic-driven and execution-guided principles. In particular, the overall architecture including the input preprocessing, semantics learning, state transition, and predictions and training are shown in **Figure 1.**

CFGs extracted from reverse engineering contain crucial information about the program logic and paths, which dictates the outputs and functionalities of assembly code. An important characteristic to differentiate CFGs from graphs in other domains such as social networks or chemistry is that node states may be dependent on the execution logic.

Programs are executed following specific orders based on the dependencies among the edges conditioned on the program state, where the results and semantics can substantially differ when orders vary. Traditional graph algorithms assume a fixed adjacency matrix and perform graph-based matching, which leads to a static learning procedure for binary code on both valid and invalid execution paths.

Reference is now made to **Figure 1.** In **Figure 1,** an input and pre processing stage **110** comprises a source code or binary code input **112.**

The dataflow then proceeds to block **114** in which assembly code from the compile may processed using the IDA Pro tool to obtain assembly functions and their CFGs. However, the present disclosure is not limited to this tool, and other tools for processing could equally be used.

The process then proceeds to block **116** in which pre processing and tokenization occur. In particular, a basic block contains a stream of instructions, which can be further broken down into operations and operands and tokenized. The entire block may be treated as one sentence and a subword and unigram model for the token encoding may be applied. Examples for doing this may be found in Taku Kudo, 2018, "Subword regularization: Improving neural network translation models with multiple subword candidates", arXiv preprint arXiv:1804,10959 (2018*)* and in Taku Kudo and John Richardson, 2018, "Sentencepiece: A simple and language independent subword tokenizer and detokenizer for neural text processing" arXiv preprint arXiv:1808.06226 (2018*).*

Assembly code is compiler dependent and can result in out-of-vocabulary (OOV) tokens very often. A way to combat the OOV issue is to break down the tokens into characters for encoding. Even with a fixed vocabulary size, unseen tokens can be encoded by matching the subword to their closest known tokens. Moreover, such process is not language dependent and can be trained from scratch efficiently.

The above leads to a CFG **120** with vector **122** and array **124.**

A semantics learning stage **130** may then be entered. In particular, at block **132** the subspace representation power may be increased by applying an embedding layer $E : V \to \mathbb{R}^{n \times v \times h}$, where $h$ is the hidden dimension. In the present disclosure, h is used as the hidden dimension throughout for simplicity, but different dimensions can be used for any layers in practice.

The process then proceeds to block **134** in which the sequential model used at this block is a bi-directional Gate Recurrent Unit (GRU). One example of such GRU is for example found in Junyoung Chung, Caglar Gulcehre, KyungHyun Cho, and Yoshua Bengio, 2014, "Empirical evaluation of gated recurrent neural networks on sequence modeling", arXiv preprint arXiv:1412.3555 (2014*).* The output of the GRU layer $U \in \mathbb{R}^{n \times v \times h}$ further embeds the token semantics by taking contextual information into account. However, the present disclosure is not limited to this sequential model, and other sequential models may be used.

In order to obtain a representation for the entire basic block, a maximum or average pooling along the time dimension may be used at block **136** to compute $U \in \mathbb{R}^{n \times h}$ for block embedding at block **138.**

## Program State Guided Execution and Functional Representation

The process next enters a state transitions/topology learning stage **140.**

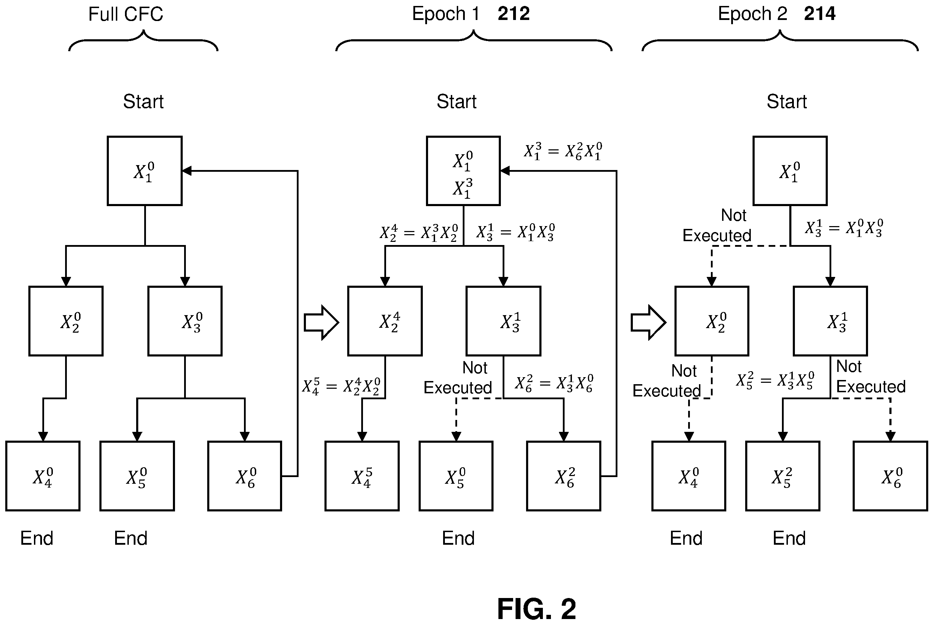

An example of the learning process is shown with regard to **Figure 2.** The training consists of many training epochs. A training epoch contains a full iteration of the executive session, which corresponds to a concrete execution path. Each epoch can have completely different execution paths as the model learns. As shown in **Figure 2,** the path for Epoch **212** goes into a loop, while Epoch **214** directly goes into the exit point. The execution agent performs multiple steps within an epoch, starting from the entry node to the other following the edge. The decision on which branch to be selected depends on the program state $X$, and $X_j^i$ indicates the updated program state at step $i$ for node $j$.

After jumping to the next node, the agent updates the program state by combining the next node's code semantics and repeats the decision process until it reaches an equilibrium state.

Specifically, referring again to **Figure 1,** The node representation $U$ is provided from block **138** to a node state block **150,** which defines the node state as $X^t$, where $X^0 = U$.

The initial node representation $U$ establishes the semantics within basic blocks, but it is not sufficient to simply globally aggregate $U$ for a high-level representation of the graph. In this regard, a reinforcement agent $a^t(s^{t-1})$ that decides the next execution path is defined, given the previous program state $s^{t-1}$. Unlike traditional neural networks that perform forward and backward pass one at a time, the methods and systems of the present disclosure internally loop through multiple states $t$ within a training epoch. The program state of block **152** is defined as a linear transformation of the node state $X^t$, where $X^0 = U$, and some trainable parameter $W_s \in \mathbb{R}^{h \times 1}$ uses Equation 4.

$$s^t = \sigma(X^t W_s) \tag{4}$$

In order for the agent to sample the action probabilities from the state $s^t \in \mathbb{R}^n$ in each step, sampling over the distribution of the state and retrieving the maximum value may be done in accordance with Equation 5.

$$p = \operatorname{argmax} s^t \tag{5}$$

The process next proceeds to block **154** for agent reparameterization. Due to the backpropagation algorithm, categorical variables are hard to train in a stochastic environment in the neural network. This layer effectively becomes non-differentiable when using normal sampling process such as argmax. A solution is to use an algorithm such as the Gumbel softmax to re-parameterize the state while maintaining the ability to backpropagate efficiently during training. Gumbel softmax is for example defined in Eric Jang, Shixiang Gu, and Ben Poole. 2016. "Categorical reparameterization with gumbel-softmax", arXiv preprint arXiv:1611.01144 (2016). Gumbel softmax is a continuous and differentiable distribution that can sample categorical distribution. It is given by Equation 6.

$$z_i^t = \frac{\exp\left((\log(s_i^{t-1}) + g_i)/\tau\right)}{\sum_j^k \exp\left((\log(s_j^{t-1}) + g_j)/\tau\right)}, for\ i = 1, \dots, k \tag{6}$$

In Equation 6, $z_i^t$ is the sample drawn from the state, $gi \sim Gumbel$ (0, 1) are samples drawn independent and identically distributed from the Gumbel distribution, and $\tau$ is the temperature controlling the discreteness of the new samples. Gumbel softmax works better with a lower value for $\tau \in [0, \infty]$ as it approaches to argmax smoothly, whereas setting a large value makes the samples become uniform. However, other agent reparameterization techniques could also be used with the embodiments of the present disclosure.

The process then proceeds to blocks **156** and **158.** In particular, in each state update, the agent may walk through the graph with the updated program state to capture the intermediate execution path that leads to certain results.

The present methods and systems have the flexibility to design the agent to be either hard or soft. A soft agent $a^t = z^t$ preserves the probabilities drawn from Gumble softmax, which implies that a program information can flow in different execution paths at the same time based on the probabilities $\sum_i z_i^t = 1$. A hard agent mimics the execution path and is one-hop, leading to one execution at a time. In other words, a hard agent erases all edges but one within a graph for the program state transition.

In practice, both the soft and hard agents may work well.

In the embodiment of **Figure 1,** the agent is shown as a policy at block **156** and the matrix A at block **158** is provided from block **124.**

At block **160** the agent $a^t \in \mathbb{R}^{n \times 1}$ is then used to select a path and generate the state-dependent adjacency

matrix $\tilde{A}^t$. The update of $\tilde{A}^t$ is provided by Equation 7.

$$\tilde{A}^t = Aa^t \qquad (7)$$

In theory, the agent may never select certain paths that exist in the original CFG. However, the experiments detailed below show that the present model outperforms traditional GNN, which uses a static A in training. Thus, such design can instead strengthen the correlation between selected execution and similarity detection by skipping unnecessary branches.

**Executor Stepping Via Implicit GNN**

The updated adjacency matrix is passed from block **160** to block **162**. Further, block **162** receives node representation $U$ from block **138**. With the updated adjacency matrix from the agent, a graph neural network on the CFG can be performed to c. However, assembly code can be large in size for various reasons. For example, a GCC compiler can use an operating system optimization level that minimizes the execution size and reduces the size of CFGs. While GNN is a suitable approach to learn the structural dependency of a function, it requires a predefined number of layers, where each layer usually performs 1-hop message passing. Intuitively, vanilla GNNs do not scale well with large graphs and can fail to capture global information. The dependency between further nodes can be crucial to understand the overall semantics of the program. Such long-range dependency is difficult to capture with longer edges.

In order to alleviate this problem, the program state transitions may be performed in the present embodiments in an implicitly defined style. In general, the transition at state $t$ can be written as an implicit form of the GNN layer, as shown in Equations 8 and 9 below.

$$X^{t+1} = \phi(X^t W^t A^t + U) \qquad (8)$$

$$y' = f_\psi(X^*) \qquad (9)$$

Such form of layer does not explicitly output a vector to be fed into the next layer. Instead, it uses a fixed-point iteration in Equation 8 that aims to find the equilibrium vector state $X^*$ as $t \to \infty$, The equilibrium state is then used for the prediction task in equation 9, where $f_\psi$ is an output function parameterized by $\psi$ for a desired classification task. With the reinforcement agent embedded in the updated adjacency matrix $\tilde{A}^* = \tilde{A}^t$: $t \to \infty$, the equilibrium solution may be formulated as Equation 10.

$$X^* = \phi(X^* W \tilde{A}^* + b_\Omega(U)) \qquad (10)$$

In Equation 10, $W \in \mathbb{R}^{h \times h}$ and $\Omega \in \mathbb{R}^{h \times h}$ are parameters, $U$ is the initial node feature. In this case, only a single layer is required to produce the updated node representation $X$ iteratively instead of requiring multiple stacking layers. $U$ is injected into the equation through some affine transformation $b_\Omega$. This ensures that original node semantics is preserved throughout the iterations when solving for the fixed point.

Although equilibrium point at block **162** can be obtained from iterating Equation 10 infinitely, this may not be the most efficient and stable method for convergence. More importantly, it does not guarantee convergence. In one embodiment Anderson acceleration may be used, where Anderson acceleration is an accelerated algorithm for finding fixed point. Anderson acceleration is for example described in Homer F Walker and Peng Ni. 2011. "Anderson acceleration for fixed-point iterations" SIAM J. Numer. Anal. 49, 4 (2011), 1715-1735. Given the function $f$ that a solution is sought for, which is Equation 10 in the present embodiment, $mk = min\{m, t\}$ may be defined as a parameter for controlling past iteration memory by setting m to any positive integer; and $g(x) = f(x) - x$ may be defined as the residual with the matrix $G_t = [g_{t-m_t}, \dots, g_t]$. This leads to equations 11 and 12 below.

$$\alpha_t = \underset{\alpha}{argmin} \, ||G_t \alpha||_2), where \, \alpha = \left(\alpha_0, \dots, \alpha_{m_t}\right) \epsilon \mathbb{R}^{m_t+1} : \sum_{i=0}^{m_t} \alpha_i = 1 \qquad (11)$$

$$x^{t+1} = \sum_{i=0}^{m_t} (\alpha_t)_i f(x_{t-m_t+i}) \tag{12}$$

Instead of computing for $x^{t+1}$ directly from $x^t$, Anderson acceleration solves for a coefficient $\alpha$ in an optimization problem that minimizes the norm of $g(x)$.

Equation 10 needs to have a unique solution X* when iterated infinitely. Such property is called the well-posedness. According to Gu, et al. (Fangda Gu, Heng Chang, Wenwu Zhu, Somayeh Sojoudi, and Laurent El Ghaoui, 2020, "Implicit graph neural networks", Advances in Neural Information Processing Systems 33 (2020), 11984-11995), $W$ and $\tilde{A}$ are well-posed for $\phi$ when Equation 10 has a unique solution.

Thus, the choice of $\phi$ needs to satisfy the component-wise non-expansive (CONE) property, where most activation functions such as ReLU, Sigmoid, and Tanh, possess such property, as provided in Laurent El Ghaoui, Fangda Gu, Bertrand Travacca, Armin Askari, and Alicia Tsai, 2021, "Implicit deep learning", SIAM Journal on Mathematics of Data Science 3, 3 (2021), 930-958. Then sufficient conditions on $W$ and $\tilde{A}$ with a CONE activation function for well-posedness may need to be constructed.

In one embodiment $\|W\|_\infty < \kappa/\lambda_{pf}(\tilde{A})$ needs to be true, where $\|W\|_\infty$ | is the infinity norm, $\lambda_{pf}(\tilde{A})$ is the Perron-Frobenius (PF) eigenvalue, and $\kappa \in [0,1)$ is the scaling constant. Equation 10 then has a unique solution. This is ensured by projecting $W$ in each update to satisfy the condition of Equation 13.

$$W' = \underset{\|M\|_\infty \leq \kappa/\lambda_{pf}(\tilde{A})}{\mathrm{argmin}} \|M - W\|_F^2 \tag{13}$$

In Equation 13, $\|\cdot\|_F$ the Frobenius norm. Even with a gated convolution which results in an updated $\tilde{A}$ for every iteration, we still maintain a well-posed $\tilde{A}$ as it contains a strictly smaller or equal PF eigenvalue than the original A given the agent $a$ is non-expansive, resulting in $\kappa/\lambda_{pf}(\tilde{A}) \geq \kappa/\lambda_{pf}(A)$.

The executor may terminate in three different scenarios. In a first scenario, if the executor reaches the exit point on the CFG, there will not be any updates to $X^{t+1}$ after Equation 10, naturally leading to an equilibrium state.

In a second scenario, if the executor reaches an equilibrium state but not at the program exit point, it logically indicates that further execution will not result in changes in the program state and therefore it is natural to terminate.

In a third scenario, if the executor reaches a configured maximum steps, this results in termination.

The results of Equation 10, upon equilibrium, are provided to block **172** in a prediction/loss stage **170**.

From block **172**, once $X^*$ is at equilibrium, the process proceeds to block **174** to apply layer normalization. An example of layer normalization is provided in Jimmy Lei Ba, Jamie Ryan Kiros, and Geoffrey E Hinton, 2016, "Layer normalization", arXiv preprint arXiv:1607.06450 (2016).

From block **174** the process proceeds to a global average pooling layer at block **176** to obtain the graph representation G using Equation 14.

$$G = \textbf{\textit{LayerNorm}}\left(\frac{\sum_i^n X_{i,j}^T}{n}\right), \forall j = 1, \ldots h \tag{14}$$

The process then proceeds to a predication layer block 178, where prediction task can be simply computed by a linear transformation to get the logits, as shown in Equation 15.

$$y' = W_p G, where\ W_p \in \mathbb{R}^{1 \times h} \tag{15}$$

The process then proceeds to labels block **180** and to loss block **182**.

In the present embodiments, by using an implicitly defined GNN layer, it is no longer required to have multiple stacking GNN layers to achieve higher order node aggregation. Instead, each state transition within the layer effectively performs a message passing, as a normal GNN layer would. This has the benefits of lowering the memory costs while maintaining a same level of representational power given the same parameters. Moreover, the long-range dependency issue can be addressed by iterating effectively "infinite" numbers of state transitions.

## Training

While the forward pass in an implicit network possesses some nice properties for the network discussed above, it is not a trivial task to train the backward pass, shown with dashed arrows in the embodiment of **Figure 1.**

Traditionally, a neural network contains exact operations with explicitly defined input and output, where the gradients can be computed via the chain rule. The loss term *l* may be defined according to Equation 16.

$$l = \mathcal{L}(\hat{y}, y) = \mathcal{L}(F_\psi(G), y) \qquad (16)$$

$F_\psi$ is the prediction rule that takes the graph embedding $G$. $\mathcal{L}(\cdot)$ computes the cross entropy loss and outputs the scalar *l*. Using the chain rule, the loss can be backpropagated in accordance with Equation 17.

$$\frac{\partial l}{\partial \theta} = \frac{\partial l}{\partial G} \frac{\partial G}{\partial X^*} \frac{\partial X^*}{\partial \theta} \qquad (17)$$

In Equation 17, the terms $\frac{\partial l}{\partial G}$ and $\frac{\partial G}{\partial X^*}$ can both be computed using any autograd software. The term $\frac{\partial X^*}{\partial \theta}$ however, is difficult to compute since the equilibrium point $X^*$ is obtained through iterative root finding. If this computation graph is unrolled, the network needs to save all intermediate gradients for every state transition. Depending on the number of transitions, this may not be a practical approach. Instead, $X^*$ may be written in its implicitly defined form shown in Equation 18.

$$X^*(\theta) = \phi\left(X^* W \tilde{A}^* + b_\Omega(U)\right) = F_I(X^*(\theta), U) \qquad (18)$$

In Equation 18, $F_I$ denotes the implicit graph neural network. By taking the derivative with respect to $\theta$, Equation 19 may be obtained.

$$\frac{\partial X^*(\theta)}{\partial \theta} = \frac{\partial F_I(X^*(\theta), U)}{\partial \theta} \qquad (19)$$

By applying the chain rule on the right hand side of Equation 19, the equation may be expanded to Equation 20.

$$\frac{\partial X^*(\theta)}{\partial \theta} = \frac{\partial F_I(X^*, U)}{\partial \theta} + \frac{\partial F_I(X^*, U)}{\partial X^*} \frac{\partial X^*(\theta)}{\partial \theta} \qquad (20)$$

At this point, both $\frac{\partial F_I(X^*, U)}{\partial \theta}$ and $\frac{\partial F_I(X^*, U)}{\partial X^*}$ can again be obtained using autograd software. The last unknown term $\frac{\partial X^*(\theta)}{\partial \theta}$ is computed through solving the linear system. In one embodiment, Anderson acceleration may be used to iteratively solve for this term.

Through implicit differentiation, the gradient at the equilibrium point may be directly evaluated. The computation of any intermediate state transition is avoided and the process can efficiently backpropagate through the network even with "infinite" number of transitions. This also allows a better memory footprint.

**Experiment**

The present systems and methods were evaluated using two semi-synthetic datasets and two real world datasets. The semi-synthetic datasets are commonly used as a benchmark in the vulnerability detection task, though the practical implications for a method should not solely depend on the synthetic results as they are less complex. The real world datasets are often much larger and can contain less trivial vulnerabilities. The evaluation metrics reported include accuracy, precision, recall, F1 score, and area under the ROC curve (AUC). Each dataset was randomly split into 75% for training and 25% for evaluation. Some metrics are not shown in the baselines due to their absence in the original works.

As indicated, four datasets were used for evaluation in total, where two were semisynthetic vulnerabilities and two were real world vulnerabilities and Common Vulnerability Exposures (CVE). The labels for all datasets are binary that splits into vulnerable and non-vulnerable.

Semi-Synthetic Datasets included the NDSS18 dataset and Juliet Test Suite. The NDSS18 dataset is a derivation from the National Institute of Standards and Technology (NIST): NVD3 and the Software Assurance Reference Dataset (SARD) project4. NDSS18 includes a total of 32,281 binary functions that are compiled using Windows and Linux. There are two types of Common Weakness Enumerations (CWEs) in NDSS18: CWE119 and CWE399.

The Juliet Test Suite is a collection of 81,000 test cases in C/C++ and Java from NIST6 that contain 112 different CWEs. Both datasets have nearly balanced distributions for the labels.

Real CVE Datasets include the FFmpeg vulnerabilities and Esh datasets, which are both extracted from real world applications or open-source libraries. The code base is significantly larger than the ones in semi-synthetic datasets. Vulnerabilities are often harder to detect in these programs due to the significantly increased complexity.

FFmpeg7 is an open-source suite of libraries written in C for handling media files like video and audio. The FFmpeg source code was compiled into binary code and obtain 16,494 binary functions, where 7,257 are vulnerable and 9,237 are non-vulnerable.

The Esh dataset contains CVE cases which include 8 different CVEs: cve-2014-0160, cve-2014-6271, cve-2015-3456, cve-2014-9295, cve-2014-7169, cve-2011-0444, cve-2014-4877, and cve-2015-6826. In total, there are 3,379 cases and only 60 are vulnerable. The distribution of vulnerability in the Esh dataset is highly imbalanced, which represents a more realistic scenario.

For baselines, the present systems and methods, labeled as "DeepEXE" in the tables below, were compared only to benchmarks also evaluated on the same dataset.

## Evaluation

For the Semi-Synthetic results, the NDSS18 dataset results are shown in Table 1.

**TABLE 1: NDSS18 Dataset Evaluation**

| Models | Input Type | Accuracy | Recall | Precision | F1 | AUC |
|---|---|---|---|---|---|---|
| Bi-LSTM | Assembly Ins. | 85.38 | 83.47 | 87.09 | 85.24 | 94.89 |
| GCN | CFG | 86.48 | 84.59 | 88.12 | 86.32 | 95.81 |
| MD-CWS | Assembly Ins. | 85.30 | 98.10 | 78.40 | 87.10 | 85.20 |
| MD-CKL | Assembly Ins. | 82.30 | 98.00 | 74.80 | 84.00 | 82.10 |
| MD-RWS | Assembly Ins. | 83.7 | 94.3 | 78.0 | 85.4 | 83.5 |
| MDSAE-NR | Assembly Ins. | 87.50 | **99.30** | 81.20 | 89.80 | 87.10 |
| TDNN-NR | Assembly Ins. | 86.60 | 98.70 | 80.30 | 88.30 | 86.30 |
| VulDeePecker | Source Code Gagets | 83.50 | 91.00 | 79.50 | 84.80 | 83.40 |
| DeepEXE | CFG | **90.58** | 89.36 | **92.13** | **90.72** | **98.01** |

The two baselines for Bi-LSTM and GCN have comparable results to the benchmarks including MDSAE-NR and TDNN-NR. All the MDSAE based methods have imbalanced precision and recall, where the models tend to over-estimate the vulnerable code. The present methods and systems (DeepEXE) have the best overall performance, leading the accuracy and AUC by 3%. Moreover, DeepEXE is a CFG-based method, and it was empirically shown that by adding the execution-guided agent and expanding the receptive field of graph convolution, the model is able to capture more topological information. Note that even in a scenario where the recall metric is highly important, the classification threshold can always be adjusted to accommodate the balance between precision and recall.

The model of the present disclosure was also able to out-perform VulDeePecker, which is a source code level method that only leverages the sequential information of the code gadget, potentially leaving the much useful topological knowledge of source out.

The Juliet dataset evaluation is shown in Table 2.

**TABLE 2: Juliet Dataset Evaluation**

| Models | Input Type | Accuracy | Recall | Precision | F1 | AUC |
|---|---|---|---|---|---|---|
| Bi-LSTM | Assembly Ins. | 96.81 | 98.44 | 95.48 | 96.94 | 99.03 |
| GCN | CFG | 97 | N/A | N/A | N/A | N/A |

(continued)

| Models | Input Type | Accuracy | Recall | Precision | F1 | AUC |
|---|---|---|---|---|---|---|
| i2v/CNN | Assembly Ins. | 87.6 | N/A | N/A | N/A | N/A |
| i2v/TCNN | Assembly Ins. | 96.1 | N/A | N/A | N/A | N/A |
| w2v/CNN | Assembly Ins. | 87.9 | N/A | N/A | N/A | N/A |
| w2v/TCNN | Assembly Ins. | 94.2 | N/A | N/A | N/A | N/A |
| i2v | Assembly Ins. | 96.81 | 97.07 | 96.65 | 96.85 | N/A |
| Bin2img | Assembly Ins. | 97.53 | 97.05 | 97.91 | 97.47 | N/A |
| w2v | Assembly Ins. | 96.01 | 96.07 | 95.92 | 95.99 | N/A |
| DeepEXE | CFG | **99.80** | **99.60** | **100.00** | **99.80** | **100.00** |

As a synthetic dataset, the test cases contain much shorter code. However, there are over 100 different CWEs among all test cases. In practice, a detection tool should be robust enough to detect unseen or zero-day vulnerabilities. It is useful for evaluating the robustness and generalizability of an approach.

The model of the present disclosure shows nearly perfect detection accuracy and AUC for this dataset. This shows that even with the single-layer design, the present model is able to generalize well enough.

The FFmpeg dataset evaluation is shown in Table 3, which specifies the code levels and input types.

**TABLE 3: FFmpeg Dataset Evaluation**

| Models | Code Level | Input Type | Accuracy | F1 |
|---|---|---|---|---|
| Bi-LSTM | Source Code | Code Snippets | 53.27 | 69.51 |
| Bi-LSTM + Attention | Source Code | Code Snippets | 61.71 | 66.01 |
| CNN | Source Code | Code Snippets | 53.42 | 66.58 |
| GGRN-CFG | Source Code | CFG | 65.00 | 71.79 |
| GGRN-composite | Source Code | AST, CFG, DFP, NCS | 64.46 | 70.33 |
| Devign-CFG | Source Code | CFG | 66.89 | 70.22 |
| Devign-composite | Source Code | AST, CFG, DFP, NCS | **69.58** | **73.55** |
| DeepEXE | Binary Code | CFG | 68.29 | 67.17 |

For Table 3, Since Devign detects vulnerability at the source code level, it is significantly easier with the rich semantics, syntax, and structures.

The present model is able to out-perform most of the approaches even at the binary code level. In particular, when only using the CFG as input, the present model achieves better accuracy than both the Devign and GGRN models. Devign-composite utilizes multiple input graphs such as AST, DFP and NCS. These additional graphs are usually only available for source code. The model of the present disclosure shows its capability at detecting vulnerabilities for real-world, complex programs. Moreover, source code CFGs are less complicated to generate, whereas binary CFGs often can be an over-estimation of the true control flow.

With the execution-guided approach of the model of the present disclosure, the errors caused by such approximation may be limited while maintaining a high level of global information. The receptive field of GNN in the model of the present disclosure may be practically unlimited, allowing accommodation of much larger graphs.

Finally, the evaluation results for the Esh dataset is shown in Table. 4.

**TABLE 4: Esh Dataset Evaluation**

| Models | Input Type | Accuracy | Recall | Precision | F1 | AUC |
|---|---|---|---|---|---|---|
| Bi-LSTM | Assembly Ins. | 99.49 | 79.48 | 88.57 | 83.78 | 96.87 |
| GCN | CFG | 99.31 | 63.89 | **95.83** | 76.67 | 83.54 |
| DeepEXE | CFG | **99.78** | **95.65** | 91.67 | **93.62** | **99.78** |

Due to the extreme imbalance of label distribution, which represents many scenarios in reality, the Bi-LSTM and GCN baselines have lower recalls. The recall metric is important when there are fewer vulnerable cases. The model of the present disclosure, on the other hand, is able to distinguish vulnerable code from non-vulnerable code given a small amount of positive labels. Note that the class weight is not manually adjusted during training, as it is cumbersome and inefficient to tune for every dataset in practice. With over 90% precision, the present model is able to identify 95% of the vulnerable CVE cases.

Similar to FFmpeg, although many cases in the Esh dataset contain large numbers of nodes, the present model is inherently designed to handle such large graphs and can out-perform other baselines.

Based on the above, control flow execution-guided deep learning framework for binary code vulnerability detection is provided. Given the importance of binary code learning, two major gaps are addressed, namely the lack of modelling program state transition and scalability for large graphs. Instead of assuming the CFG is accurate, which is often not due to the overestimation from static analysis, a reinforcement agent is used to guide the execution of a program flow that mimics the behavior of dynamic analysis.

The model of the present disclosure is able to capture certain program state transitions that lead to specific vulnerability result, creating a higher dependency between the output and internal node state and topological information.

To scale the learning ability of the neural network of the present model, an implicit graph neural network is utilized for "infinite" message passing and neighbor aggregation. This fits well with the previous agent design since it allows for state transition to reach equilibrium in every training epoch.

Benefits of training an implicitly defined network are shown above, which directly obtain the gradients for the equilibrium point and mitigate the heavy memory footprint in large networks.

In the experiments, it was demonstrated that the present model outperforms all state-of-the-art vulnerability detection methods for the NDSS18 and Juliet dataset. The present model is also very competitive in detecting real world CVEs even when compared to source code level methods, which are less difficult given the amount of available information.

As will be appreciated by those skilled in the art, the systems and methods described herein are not restricted to vulnerability detection in the cybersecurity domain. In other security tasks such as binary code similarity detection or malware detection, matching the graph structures of malign programs is often done using GNN. By modifying the training objective, the model of the present disclosure can be used for more supervised and unsupervised tasks. Moreover, as long as the input data has some form of graphical structures, the same design may be deployed to many other domains such as social network and chemistry studies.

**Example Hardware**

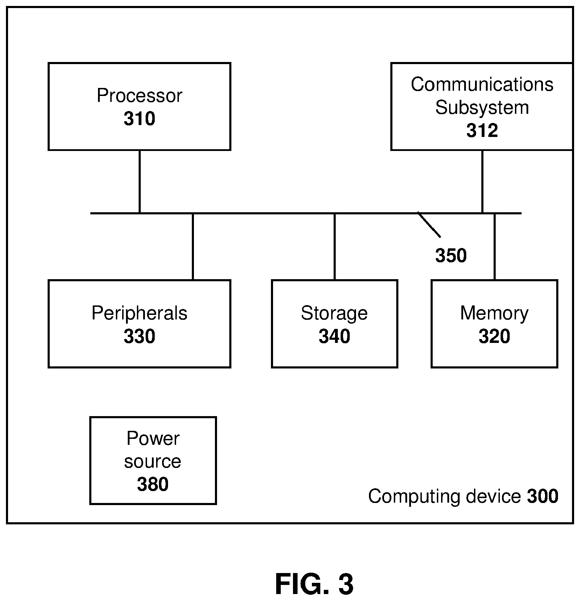

The above functionality may be implemented on any one or combination of computing devices. **Figure 3** is a block diagram of a computing device 300 that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, etc. The computing device **300** may comprise a central processing unit (CPU) or processor **310,** communications subsystem **312,** memory **320,** a mass storage device **340,** and peripherals **330.**

Peripherals **330** may comprise, amongst others one or more input/output devices, such as a speaker, microphone, mouse, touchscreen, keypad, keyboard, printer, display, network interfaces, and the like.

Communications between processor **310,** communications subsystem **312,** memory **320,** mass storage device **340,** and peripherals **330** may occur through one or more buses **350.** The bus **350** may be one or more of any type of several bus architectures including a memory bus or memory controller, a peripheral bus, video bus, or the like.

The processor **310** may comprise any type of electronic data processor. The memory **320** may comprise any type of system memory such as static random-access memory (SRAM), dynamic random access memory (DRAM), synchronous DRAM (SDRAM), read-only memory (ROM), a combination thereof, or the like. In an embodiment, the memory **320** may include ROM for use at boot-up, and DRAM for program and data storage for use while executing programs.

The mass storage device **340** may comprise any type of storage device configured to store data, programs, and other information and to make the data, programs, and other information accessible via the bus. The mass storage device **340** may comprise, for example, one or more of a solid-state drive, hard disk drive, a magnetic disk drive, an optical disk drive, or the like.

The computing device **300** may also include a communications subsystem **312,** which may include one or more network interfaces, which may comprise wired links, such as an Ethernet cable or the like, and/or wireless links to access nodes or different networks. The communications subsystem **312** allows the processing unit to communicate with remote units via the networks. For example, the communications subsystem **312** may provide wireless communication via one or more transmitters/transmit antennas and one or more receivers/receive antennas. In an embodiment, the processing unit is coupled to a local-area network or a wide-area network, for data processing and communications with remote devices, such as other processing units, the Internet, remote storage facilities, or the like.

Through the descriptions of the preceding embodiments, the teachings of the present disclosure may be implemented by using hardware only or by using a combination of software and hardware. Software or other computer executable instructions for implementing one or more embodiments, or one or more portions thereof, may be stored on any suitable computer readable storage medium. The computer readable storage medium may be a tangible or in transitory/non-transitory medium such as optical (e.g., CD, DVD, Blu-Ray, etc.), magnetic, hard disk, volatile or non-volatile, solid state, or any other type of storage medium known in the art.

**Claims**

1. A method at a computing device for vulnerability detection in software code, the method comprising:

    creating a node representation of the software code; and
    performing state transition and topology learning on the node representation, the performing comprising:

        looping through multiple execution states within a training epoch;
        sampling over distribution of the multiple execution states and retrieving a maximum value;
        performing agent re-parameterization;
        capturing intermediate execution paths;
        selecting an execution path from the intermediate execution paths and generating a state-dependent adjacency matrix;
        using the state-dependent adjacency matrix and node representation with an implicit Graph Neural Network to find an equilibrium vector state; and
        using the equilibrium vector state to perform a prediction task for vulnerability detection in the software code.

2. The method of claim 1, wherein the creating the node representation comprises:

    transforming software code to assembly code;
    performing pre-processing and tokenization on the assembly code to create a Control Flow Graph;
    applying an embedding layer to increase subspace representation power; and
    computing block embedding using a maximum or average pooling along a time dimension.

3. The method of claim 2, wherein the applying the embedding layer creates a bi-directions Gate Recurrent Unit.

4. The method of any preceding claim, wherein the selecting the execution path is performed by a reinforcement agent $a^t$ ($s^{t-1}$), where $t$ is a layer and $s^{t-1}$ is a previous state.

5. The method of any preceding claim, wherein the agent re-parameterization uses a Gumbel softmax algorithm.

6. The method of any preceding claim, wherein the prediction task comprises:

    performing layer normalization on the equilibrium vector state;
    using global average pooling to obtain a graph representation; and
    computing a linear transformation on the graph representation to complete the prediction task.

7. The method of claim 6, further comprising finding labels and losses from the linear transformation.

8. The method of any preceding claim, further comprising training of the implicit Graph Neural Network with a backward pass, the training comprising providing a gradient at the equilibrium vector state to the node representation.

9. The method of any preceding claim, wherein the training epoch contains a full iteration of an executive session corresponding to a concrete execution path.

10. A computing device configured for vulnerability detection in software code, the computing device comprising:

    a processor; and
    a memory;

wherein the computing device is configured to carry out the method of any preceding claim.

11. A computer readable medium for storing instruction code, which, when executed by a processor of a computing device configured for vulnerability detection in software code, cause the computing device to carry out the method of any one of claims 1 to 9.

12. A computer program, which, when executed by a processor of a computing device configured for vulnerability detection in software code, causes the computing device to carry out the method of any one of claims 1 to 9.

**Patentansprüche**

1. Ein Verfahren an einer Rechenvorrichtung zur Schwachstellenerkennung in Softwarecode, wobei das Verfahren Folgendes beinhaltet:

   Erzeugen einer Knotendarstellung des Softwarecodes; und
   Durchführen von Zustandsübergang und Topologielernen an der Knotendarstellung, wobei das Durchführen Folgendes beinhaltet:

   Durchlaufen mehrerer Ausführungszustände innerhalb einer Trainingsepoche;
   Abtasten über Verteilung der mehreren Ausführungszustände und Abrufen eines Maximalwerts;
   Durchführen von Agentenneuparametrisierung;
   Erfassen von Zwischenausführungspfaden;
   Auswählen eines Ausführungspfads aus den Zwischenausführungspfaden und Generieren einer zustandsabhängigen Nachbarschaftsmatrix;
   Verwenden der zustandsabhängigen Nachbarschaftsmatrix und
   Knotendarstellung mit einem impliziten Graph Neural Network, um einen Gleichgewichtsvektorzustand zu finden; und
   Verwenden des Gleichgewichtsvektorzustands, um eine Vorhersageaufgabe zur Schwachstellenerkennung in dem Softwarecode durchzuführen.

2. Verfahren gemäß Anspruch 1, wobei das Erzeugen der Knotendarstellung Folgendes beinhaltet:

   Transformieren von Softwarecode in Assemblercode;
   Durchführen von Vorverarbeitung und Tokenisierung an dem Assemblercode, um einen Kontrollflussgraphen zu erzeugen;
   Anwenden einer Einbettungsschicht, um die Unterraumdarstellungsleistung zu erhöhen; und
   Berechnen von Blockeinbettung unter Verwendung eines maximalen oder
   durchschnittlichen Poolings entlang einer Zeitdimension.

3. Verfahren gemäß Anspruch 2, wobei das Anwenden der Einbettungsschicht eine bidirektionale Gate Recurrent Unit erzeugt.

4. Verfahren gemäß einem der vorhergehenden Ansprüche, wobei das Auswählen des Ausführungspfads durch einen Verstärkungsagenten $a^t(s^{t-1})$ durchgeführt wird, wobei $t$ eine Schicht ist und $s^{t-1}$ ein vorheriger Zustand ist.

5. Verfahren gemäß einem der vorhergehenden Ansprüche, wobei die Agentenneuparametrisierung einen Gumbel-Softmax-Algorithmus verwendet.

6. Verfahren gemäß einem der vorhergehenden Ansprüche, wobei die Vorhersageaufgabe Folgendes beinhaltet:

   Durchführen von Schichtnormalisierung an dem Gleichgewichtsvektorzustand;
   Verwenden von globalem durchschnittlichem Pooling, um eine Graphendarstellung zu erhalten; und
   Berechnen einer linearen Transformation an der Graphendarstellung, um die Vorhersageaufgabe zu vervollständigen.

7. Verfahren gemäß Anspruch 6, das ferner das Finden von Labels und Verlusten aus der linearen Transformation beinhaltet.

**8.** Verfahren gemäß einem der vorhergehenden Ansprüche, das ferner das Trainieren des impliziten Graph Neural Network mit einem Rückwärtsdurchlauf beinhaltet, wobei das Trainieren das Bereitstellen eines Gradienten an dem Gleichgewichtsvektorzustand für die Knotendarstellung beinhaltet.

**9.** Verfahren gemäß einem der vorhergehenden Ansprüche, wobei die Trainingsepoche eine vollständige Iteration einer Executive Session enthält, die einem konkreten Ausführungspfad entspricht.

**10.** Eine Rechenvorrichtung, die zur Schwachstellenerkennung in Softwarecode konfiguriert ist, wobei die Rechenvorrichtung Folgendes beinhaltet:

einen Prozessor; und
einen Speicher;
wobei die Rechenvorrichtung konfiguriert ist, um das Verfahren gemäß einem der vorhergehenden Ansprüche auszuführen.

**11.** Ein computerlesbares Medium zum Speichern von Anweisungscode, der, wenn er von einem Prozessor einer Rechenvorrichtung ausgeführt wird, die zur Schwachstellenerkennung in Softwarecode konfiguriert ist, die Rechenvorrichtung veranlasst, das Verfahren gemäß einem der Ansprüche 1 bis 9 auszuführen.

**12.** Ein Computerprogramm, das, wenn es von einem Prozessor einer Rechenvorrichtung ausgeführt wird, die zur Schwachstellenerkennung in Softwarecode konfiguriert ist, die Rechenvorrichtung veranlasst, das Verfahren gemäß einem der Ansprüche 1 bis 9 auszuführen.

**Revendications**

**1.** Un procédé au niveau d'un dispositif informatique pour la détection de vulnérabilité dans un code logiciel, le procédé comprenant :

la création d'une représentation de nœud du code logiciel ; et
la réalisation d'un apprentissage de transition d'état et de topologie sur la représentation de nœud, la réalisation comprenant :

le passage en boucle à travers de multiples états d'exécution au sein d'une époque d'entraînement ;
l'échantillonnage sur la distribution des multiples états d'exécution et la récupération d'une valeur maximale ;
la réalisation d'une reparamétrisation d'agent ;
la capture de chemins d'exécution intermédiaires ;
la sélection d'un chemin d'exécution parmi les chemins d'exécution intermédiaires et la génération d'une matrice d'adjacence dépendant de l'état ;
l'utilisation de la matrice d'adjacence dépendant de l'état et de la représentation de nœud avec un réseau neuronal à graphes implicite afin de découvrir un état de vecteur d'équilibre ; et
l'utilisation de l'état de vecteur d'équilibre afin de réaliser une tâche de prédiction pour la détection de vulnérabilité dans le code logiciel.

**2.** Le procédé de la revendication 1, dans lequel la création de la représentation de nœud comprend :

la transformation d'un code logiciel en un code d'assemblage ;
la réalisation d'un prétraitement et d'une tokenisation sur le code d'assemblage afin de créer un graphe de flux de contrôle ;
l'application d'une couche d'intégration afin d'augmenter la puissance de représentation de sous-espace ; et
le calcul d'une intégration de bloc en utilisant un regroupement maximal ou moyen le long d'une dimension temporelle.

**3.** Le procédé de la revendication 2, dans lequel l'application de la couche d'intégration crée une unité récurrente à porte bidirectionnelle.

**4.** Le procédé de n'importe quelle revendication précédente, dans lequel la sélection du chemin d'exécution est réalisée par un agent de renforcement $a^t(s^{t-1})$, où $t$ est une couche et $s^{t-1}$ est un état précédent.

**5.** Le procédé de n'importe quelle revendication précédente, dans lequel la reparamétrisation d'agent utilise un algorithme de Gumbel-Softmax.

**6.** Le procédé de n'importe quelle revendication précédente, dans lequel la tâche de prédiction comprend :

la réalisation d'une normalisation de couche sur l'état de vecteur d'équilibre ;
l'utilisation d'un regroupement moyen global afin d'obtenir une représentation de graphe ; et
le calcul d'une transformation linéaire sur la représentation de graphe afin d'accomplir la tâche de prédiction.

**7.** Le procédé de la revendication 6, comprenant en outre la découverte d'étiquettes et de pertes à partir de la transformation linéaire.

**8.** Le procédé de n'importe quelle revendication précédente, comprenant en outre l'entraînement du réseau neuronal à graphes implicite avec un passage en arrière, l'entraînement comprenant la fourniture d'un gradient à l'état de vecteur d'équilibre à la représentation de nœud.

**9.** Le procédé de n'importe quelle revendication précédente, dans lequel l'époque d'entraînement contient une itération complète d'une session exécutive correspondant à un chemin d'exécution concret.

**10.** Un dispositif informatique configuré pour la détection de vulnérabilité dans un code logiciel, le dispositif informatique comprenant :

un processeur ; et
une mémoire ;
dans lequel le dispositif informatique est configuré pour mettre en œuvre le procédé de n'importe quelle revendication précédente.

**11.** Un support lisible par ordinateur pour stocker un code d'instruction qui, lorsqu'il est exécuté par un processeur d'un dispositif informatique configuré pour la détection de vulnérabilité dans un code logiciel, amène le dispositif informatique à mettre en œuvre le procédé de n'importe laquelle des revendications 1 à 9.

**12.** Un programme d'ordinateur qui, lorsqu'il est exécuté par un processeur d'un dispositif informatique configuré pour la détection de vulnérabilité dans un code logiciel, amène le dispositif informatique à mettre en œuvre le procédé de n'importe laquelle des revendications 1 à 9.

**FIG. 1**

Full CFC

Start

$X_1^0$

$X_2^0$     $X_3^0$

$X_4^0$     $X_5^0$     $X_6^0$

End     End

Epoch 1   **212**

Start

$X_1^0$
$X_1^3$

$X_1^3 = X_6^2 X_1^0$

$X_2^4 = X_1^3 X_2^0$     $X_3^1 = X_1^0 X_3^0$

$X_2^4$     $X_3^1$

$X_4^5 = X_2^4 X_2^0$    Not Executed    $X_6^2 = X_3^1 X_6^0$

$X_4^5$     $X_5^0$     $X_6^2$

End

Epoch 2   **214**

Start

$X_1^0$

Not Executed     $X_3^1 = X_1^0 X_3^0$

$X_2^0$     $X_3^1$

Not Executed    $X_5^2 = X_3^1 X_5^0$    Not Executed

$X_4^0$     $X_5^2$     $X_6^0$

End     End

**FIG. 2**

EP 4 407 496 B1

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ASHITA DIWAN**. VDGraph2Vec: Vulnerability Detection in Assembly Code using Message Passing Neural Networks. *21st IEEE International Conference on machine Learning and Applications relates to Software vulnerability detection.*, 12 December 2022
- **TOMAS MIKOLOV et al.** Efficient estimation of word representations in vector space. *arXiv preprint arXiv: 1301.3781.*, 2013
- **LEE et al.** Instruction2Vec: Efficient Preprocessor of Assembly Code to Detect Software Weakness with CNN. *Applied Sciences*, 2019, vol. 9 (19), 4086
- **HAN YAN et al.** HAN-BSVD: a hierarchical attention network for binary software vulnerability detection. *Computers & Security*, 2021, vol. 108, 102286
- **JUNFENG TIAN et al.** BVDetector: A program slice-based binary code vulnerability intelligent detection system. *Information and Software Technology*, 2020, vol. 123, 106289
- **XIAOJUN XU et al.** Neural network-based graph embedding for cross-platform binary code similarity detection. *Proceedings of the 2017 ACM SIGSAC Conference on Computer and Communications Security*, 363-376
- **BINGCHANG LIU et al.** αdiff: cross-version binary code similarity detection with dnn. *Proceedings of the 33rd ACM/IEEE International Conference on Automated Software Engineering*, 667-678
- **ZEPING YU et al.** Order matters: semantic-aware newual networks for binary code similarity detection. *Proceedings of the AAAI Conference on Artificial Intelligence*, vol. 34, 1145-1152
- **FEI ZUO et al.** Neural machine translation inspired binary code similarity comparison beyond function pairs. *arXiv preprint arXiv:1808.04706*, 2018
- **DONGHAI TIAN et al.** BinDeep: A deep learning approach to binary code similarity detection. *Expert Systems With Applications*, 2021, vol. 168, 114348
- **BALDONI et al.** A survey of symbolic execution techniques. *ACM Computing Surveys (CSUR)*, 2018, vol. 51 (3), 1-39
- **DUAN et al.** Deepbindiff: Learning program-wide code representations for binary diffing. *Network and Distributed System Security Symposium*, 2020

- **CHANDRAMOHAN et al.** BinGo: cross-architecture cross-OS binary search. *Proceedings of the 2016 24th ACM SIGSOFT International Symposium on Foundations of Software Engineering*, 2016
- **YANIV DAVID et al.** Tracelet-based code search in executables. *Acm Sigplan Notices*, 2014, vol. 49 (6), 349-360
- **ZEPING YU et al.** Order matters: semantic-aware neural networks for binary code similarity detection. *Proceedings of the AAAI Conference on Artificial Intelligence*, 2020, vol. 34, 1145-1152
- **AAKANSHI GUPTA et al.** Extracting rules for vulnerabilities detection with static metrics using machine learning. *International Journal of System Assurance Engineering and Management*, 2021, vol. 12 (1), 65-76
- **KAZI ZAKIA SULTANA et al.** Using software metrics for predicting vulnerable classes and methods in Java projects: A machine learning approach. *Journal of Software: Evolution and Process*, 2021, vol. 33 (3), e2303
- **ZHEN LI et al.** Vuldeelocator: a deep learning-based fine-grained vulnerability detector. *IEEE Transactions on Dependable and Secure Computing*, 2021
- **ZHEN LI et al.** VulDeePecker: A deep learning-based system for vulnerability detection.. *arXiv preprint arXiv:1801.01681*, 2018
- **DEQING ZOU et al.** mu μ VulDeePecker: A Deep Learning-Based System for Multiclass Vulnerability Detection. *IEEE Transactions on Dependable and Secure Computing*, 2019, vol. 18 (5), 2224-2236
- **SHAOJIE BAI et al.** Deep equilibrium models. *Advances in Neural Information Processing Systems i*, 2019
- **FILIPE DE AVILA BELBUTE-PERES et al.** End-to-end differentiable physics for learning and control. *Advances in neural information processing systems*, 2018, vol. 31
- **FANGDA GU et al.** Implicit graph neural networks. *Advances in Neural Information Processing Systems*, 2020, vol. 33, 11984-1199520
- **THOMAS N KIPF** ; **MAX WELLING.** Semi-supervised classification with graph convolutional networks. *arXiv preprint arXiv:1609.02907*, 2016

- **RONALD J WILLIAMS**. Simple statistical gradient-following algorithms for connectionist reinforcement learning. *Machine learning*, 1992, vol. 8 (3), 229-256
- **TAKU KUDO**. Subword regularization: Improving neural network translation models with multiple subword candidates. *arXiv preprint arXiv:1804,10959*, 2018
- **TAKU KUDO** ; **JOHN RICHARDSON**. Sentencepiece: A simple and language independent subword tokenizer and detokenizer for neural text processing. *arXiv preprint arXiv:1808.06226*, 2018
- **JUNYOUNG CHUNG** ; **CAGLAR GULCEHRE** ; **KYUNGHYUN CHO** ; **YOSHUA BENGIO**. Empirical evaluation of gated recurrent neural networks on sequence modeling. *arXiv preprint arXiv:1412.3555*, 2014
- **ERIC JANG** ; **SHIXIANG GU** ; **BEN POOLE**. Categorical reparameterization with gumbel-softmax. *arXiv preprint arXiv:1611.01144*, 2016
- **HOMER F WALKER** ; **PENG NI.** Anderson acceleration for fixed-point iterations. *SIAM J. Numer. Anal.*, 2011, vol. 49 (4), 1715-1735
- **FANGDA GU** ; **HENG CHANG** ; **WENWU ZHU** ; **SOMAYEH SOJOUDI** ; **LAURENT EL GHAOUI**. Implicit graph neural networks. *Advances in Neural Information Processing Systems*, 2020, vol. 33, 11984-11995
- **LAURENT EL GHAOUI** ; **FANGDA GU** ; **BERTRAND TRAVACCA** ; **ARMIN ASKARI** ; **ALICIA TSAI**. Implicit deep learning. *SIAM Journal on Mathematics of Data Science*, 2021, vol. 3 (3), 930-958
- **JIMMY LEI BA** ; **JAMIE RYAN KIROS** ; **GEOFFREY E HINTON**. Layer normalization. *arXiv preprint arXiv:1607.06450*, 2016